# EUROPEAN PATENT SPECIFICATION

(11) **EP 4 414 686 B1**
(45) Date of publication and mention of the grant of the patent: **19.08.2026**
(21) Application number: 22892523.6
(22) Date of filing: 19.10.2022
(51) Int. Cl.: G01N 3/04, G01N 3/08, G01N 17/00

(54) **JIG FOR ASSESSING DELAYED FRACTURE, METHOD FOR ASSESSING DELAYED FRACTURE IN SHEARED END SURFACE**
SPANNVORRICHTUNG ZUR BEURTEILUNG VON VERZÖGERTEM BRUCH, VERFAHREN ZUR BEURTEILUNG VON VERZÖGERTEM BRUCH IN GESCHERTER ENDFLÄCHE
GABARIT POUR ÉVALUATION DE RUPTURE DIFFÉRÉE, PROCÉDÉ D'ÉVALUATION DE RUPTURE DIFFÉRÉE DANS UNE SURFACE D'EXTRÉMITÉ CISAILLÉE

(30) Priority: 12.11.2021 JP 2021185033
(43) Date of publication of application: 14.08.2024
(73) Proprietor: JFE Steel Corporation, Tokyo 100-0011 (JP)
(72) Inventor: MATSUKI Yuichi, Tokyo 100-0011 (JP); SHINMIYA Toyohisa, Tokyo 100-0011 (JP); NAKAGAWA Kinya, Tokyo 100-0011 (JP); YAMASAKI Yuji, Tokyo 100-0011 (JP)
(74) Representative: Grünecker Patent- und Rechtsanwälte PartG mbB
(86) International application number: PCT/JP2022/038968
(87) International publication number: WO 2023/085023

(56) References cited:
- CN-A- 103 674 817
- JP-A- 2009 069 004
- JP-A- 2013 124 999
- JP-A- 2016 003 951
- JP-A- H0 273 133
- JP-A- S58 205 836
- JP-U- H0 312 155
- JP-U- H0 445 953
- JP-U- S5 525 270
- JP-U- S54 127 579
- KR-A- 20090 100 879
- KR-A- 20170 077 091
- MATSUKI YUICHI, JUNSUKE TOBITA, KINYA NAKAGAWA, TOYOHISA SHINGU, YUJI YAMAZAKI, YOSHIKIYO TAMAI: "Effect of Microstructural Transformation upon Edge Heat Treatment on Stretch Flangeability of Ultrahigh-Strength Steel with Sheared Edge", JOURNAL OF THE JAPAN SOCIETY FOR TECHNOLOGY OF PLASTICITY, vol. 63, no. 736, 1 May 2022 (2022-05-01), pages 65 - 71, XP093065691

## Description

### Technical Field

The present invention relates to a technology for assessing delayed fracture in a sheared end surface of a metal sheet in press forming. The present invention is a technology suitable for a delayed fracture assessment on a sheared end surface of a high-strength steel sheet having a tensile strength of 980 MPa or more. In addition, the present invention is a technology particularly suitable for assessment of automobile components.

### Background Art

At present, automobiles are required to improve fuel efficiency and collision safety by reducing a weight. A high-strength steel sheet having a tensile strength of 980 MPa or more is used for the purpose of achieving both the weight reduction of a vehicle body and protection of an occupant in the event of a collision. In recent years, particularly, an ultra-high-strength steel sheet having a tensile strength of 1470 MPa or more has been applied to the vehicle body. One of the problems in applying the high-strength steel sheet to the vehicle body is delayed fracture. Particularly, in the ultra-high-strength steel sheet, delayed fracture occurred from an end surface (hereinafter, referred to as a sheared end surface) after a shearing process has become an important problem.

It is known that a large tensile stress remains on the sheared end surface. For this reason, there is a concern that delayed fracture occurs on the sheared end surfaces after press forming.

Here, it is known that the delayed fracture in the sheared end surface is further promoted by applying an external stress. Then, there are test methods (PTL 1 and PTL 2) in which a stress is applied by a constant displacement restraint due to bending deformation, for example, to assess delayed fracture in the sheared end surface. Further, as another test method, a test has been proposed in which stress is applied by constant load application due to uniaxial deformation (PTL 3).

PTL 4 discloses a jig for high speed tensile testing of a workpiece.

PTL 5 discloses a device capable of measuring strain.

### Citation List

### Patent Literature

PTL 1: JP6380423 B
PTL 2: JP5971058 B
PTL 3: JP6354476 B
PTL 4: KR 2009 0100879 A
PTL 5: KR 2017 0077091 A

### Non Patent Literature

NPL 1: Cheng Liu, Ping Liu, Zhenbo Zhao and Derek O. Northwood: Room temperature creep of a high strength steel, Materials and Design, 22 (2001) 325-328.
NPL 2: K. Harihara, O. Majidi, C. Kim, M.G. Lee and F. Barlet: Stress relaxation and its effect on tensile deformation of steels, Materials and Design, 52 (2013) 284-288.

### Summary of Invention

### Technical Problem

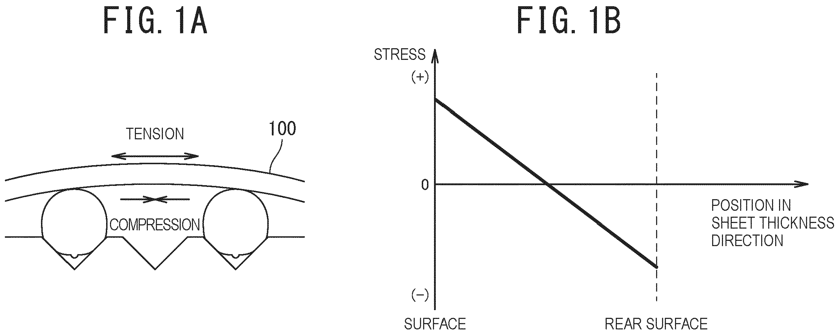

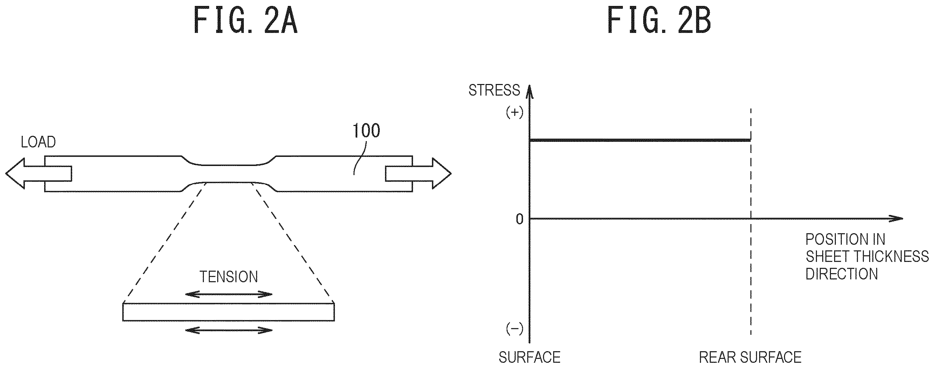

The inventors compared uniaxial deformation (see FIG. 2A) and bending deformation (see FIG. 1A) under the same stress load conditions. As a result of intensive examinations by the inventors, it has been found that, even with the same stress load, a critical stress at which delayed fracture does not occur in the sheared end surfaces may be lower in the uniaxial deformation. The reason is that in the bending deformation, a stress gradient exists in a sheet thickness direction as compared with the uniaxial deformation. Therefore, it is presumed that this is because the crack growth of the delayed fracture is suppressed in the bending deformation. Here, FIG. 1A illustrates a stress distribution in the sheet thickness direction due to the bending deformation. FIG. 1B illustrates the stress distribution in the sheet thickness direction due to the uniaxial deformation.

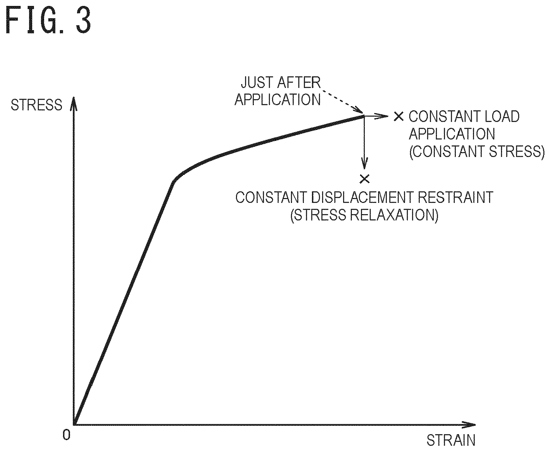

Further, FIG. 3 is a diagram illustrating a schematic diagram of a stress-strain relationship in a case where the constant displacement restraint and constant load application are held for a sufficiently long time.

The inventors applied a load to a high-strength steel sheet and compared a case where the restraint state is set to the constant displacement restraint with a case where the restraint state is set to the constant load application. Then, as a result of the examination by the inventors, it was found that the stress is relaxed as illustrated in FIG. 3 in the case of the constant displacement restraint even if the load stress at the start of the restraint is the same. Therefore, it was found that an apparent delayed fracture limit stress is higher in the case of the constant displacement restraint than in the case of the constant load application. As described in NPL 1, it is presumed that this is due to the effect of gradually creep deformation of high-strength steel when it is held under a constant stress even at room temperature. Further, as described in NPL **2,** it is presumed that this is due to the effect of generation of stress relaxation in the case of constant displacement restraint.

Further, in a case of considering the assessment of the delayed fracture in the sheared end surface in the press-formed article used as an automobile component, the stress load actually received by the actual automobile component is mainly the residual stress due to press forming. Therefore, the press-formed article as the automobile component is deformed into a certain shape and is held and used in that state. Therefore, it can be said that the constant displacement restraint is closer to a situation of the stress load received by the actual automobile component than in the case of being restrained by a constant load application after the load is applied.

In that respect, it can be said that the methods of PTL 1 and PTL 2 are excellent methods for the load due to bending. That is, in the methods of PTL 1 and PTL 2, a load due to bending is applied to the sheared end surface, which is a straight portion of flat cutting, by constant displacement restraint. Accordingly, in the methods of PTL 1 and PTL 2, it is possible to assess the delayed fracture by applying a load close to uniform to the sheared end surface of a predetermined region.

On the other hand, it has been found that there are some difficult points in the assessment of the straight portion of flat cutting in the displacement restraint due to the uniaxial deformation by the conventional methods. For example, PTL 3 adopts a load on a test piece 100 by a constant load using a pin. However, in the test piece 100, a width of the region between pin holes is narrowed, and thereby the stress is the highest. However, since the plate width must be small at that location, a notch is made or the like.

In addition, most portions of the sheared end surfaces of the automobile components are not curved portions but straight portions of flat cutting produced by linear shearing. Therefore, the method for assessing a delayed fracture in which a stress is applied to the sheared end surface which is the straight portion of flat cutting is the most important.

In addition, in a case where flat cutting is adopted, it means that a shear angle can be added and a clearance can be adjusted, which is preferable for a more practical examination.

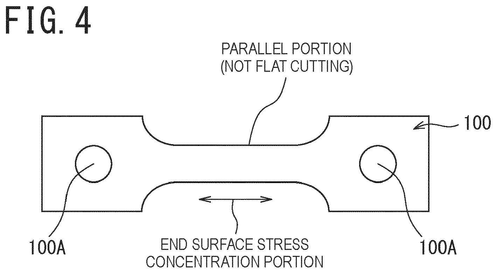

FIG. 4 is a schematic view illustrating a shape of a tensile test piece 100 having pin holes 100A on the left and right, and a parallel portion to be applicable to a constant load test. However, the test piece 100 as illustrated in FIG. 4 is not processed for flat cutting even if a part of the sheared end surface is a straight line along a longitudinal direction. Therefore, in the test piece 100 as illustrated in FIG. 4, it is difficult to assess a portion such as the straight portion of flat cutting. For example, the sheared end surface cannot be formed by linear flat cutting, and it is necessary to perform shearing with a shear blade that has a curvature according to the notch. As a result, it is difficult to adjust the shear angle or the clearance when the test piece is produced.

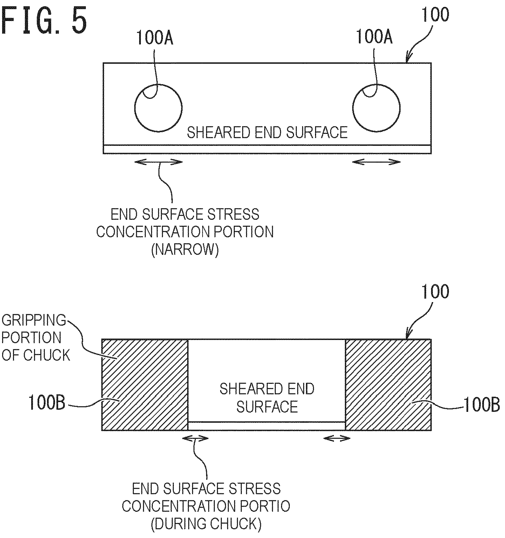

FIG. 5 is a view illustrating a rectangular-shaped test piece 100 having a sheared end surface of flat cutting. In the test piece 100 of FIG. 5, a uniaxial stress is applied by penetrating pins into pin holes formed on the left and right and displacing a portion between the pins. Then, the test piece 100 of FIG. 5 can be restrained in a state of being tensile-deformed. Further, a uniaxial stress can be applied by interposing the left and right both end portions of the test piece 100 with a chuck. When the uniaxial stress is applied in this way, at first glance, it seems that it is possible to assess the sheared end surface of the straight portion of flat cutting by the displacement restraint due to the uniaxial deformation.

However, assuming a case where the material of the test piece is a high-strength steel sheet, the following problems arise. That is, in practice, in a case where the pins are used, in the rectangular test piece 100 as illustrated in FIG. 5, a tensile stress is applied to only a small part around the pin hole 100A (arrow portions in FIG. 5). Therefore, the test piece 100 does not have a uniform stress distribution along the longitudinal direction. Further, a case where the uniaxial stress is applied to the left and right both end portions of the test piece 100 made of the high-strength steel sheet by being interposed with the chuck is considered. In this case, correct assessment is difficult because the stress is concentrated on a portion of the end of the chuck (arrow portion in FIG. 5) or the chuck slips.

The present invention has been made by paying attention to the above points, and an object of the present invention is to provide a jig and a test piece capable of assessing a delayed fracture in a sheared end surface more accurately and easily, and a method for assessing a delayed fracture using the same.

### Solution to Problem

As described above, there is a concern about a delayed fracture occurred from the sheared end surface of the high-strength steel sheet.

The inventors obtained the following findings through various examinations.

It is preferable that the sheared end surface formed on the test piece has a linear shape formed by flat cutting. In the case of producing the linear sheared end surface, since it is sufficient to use the linear shear blade, the shear angle or the clearance, which are conditions for shearing, can be easily adjusted.

In addition, in the case of the high-strength steel sheet, it is preferable to apply the tensile load through the left and right pin holes rather than applying the tensile load with the chuck.

Further, it is effective to perform a delayed fracture assessment by applying a displacement restraint due to uniaxial deformation and applying a tensile stress as uniform as possible to the flat-cutting straight portion as much as possible on the test piece. The assessment is particularly effective for a metal sheet which is an automobile component or the like. However, for a target test piece having a linear sheared end surface at least in a region between the pin holes, the following phenomenon occurs in a case where a tensile load is simply applied through the left and right pin holes. That is, in a case where the test piece is a high-strength steel sheet, the stress is concentrated in a narrow range near the pin holes.

Further, the jig that realizes the displacement restraint by the uniaxial deformation with respect to the test piece is preferably a jig that can easily perform the uniaxial deformation and can be installed in a hydrogen intrusion environment.

At this time, a case where the jig that applies stress to the test piece and restrains the test piece in that state is made of a material of, for example, stainless steel or aluminum and the material is a dissimilar metal to the test piece will be considered. In this case, a corrosion current is generated for the test piece in a corrosive environment, and the hydrogen intrusion environment changes. Therefore, it is desirable that the test piece and the jig are electrically insulated.

In the present disclosure, on the premise of such findings, a simple jig, a test piece shape, and an assessment method using the same to realize the findings are considered.

The cross section cut by flat cutting has an extension of the cross section on a straight line. Therefore, there is an advantage that it is easy to adjust a clearance or the like of the shear blade for forming the sheared end surface. In a case of a shape having non-parallel portions as in FIG. 4, it is difficult to form the sheared end surface by flat cutting.

Then, to solve the problem, a jig for assessing a delayed fracture and a method for assessing a delayed fracture according to the invention are as specified in claims 1 and 7. Preferred embodiments thereof are specified in the dependent claims.

### Advantageous Effects of Invention

The jig of the aspect of the present invention can easily apply a tensile load to the test piece, and can be installed in a hydrogen intrusion environment to perform a test for delayed fracture assessment.

In addition, even if the test piece according to the aspect of the present invention is made of a high-strength steel sheet, the following effects are exhibited. That is, by the tensile load through the left and right pin holes, it is possible to apply a near-uniform tensile stress to a region longer than the conventional one in the sheared end surface. As a result, the jig of the aspect of the present invention can realize a test for delayed fracture assessment more accurately.

In addition, according to the aspect of the present invention, it becomes easy to predict the occurrence of delayed fracture when, for example, the high-strength steel sheet is applied to various components such as panel components, and structure/frame components of an automobile. According to the aspect of the present invention, a weight of an automobile body can be reduced by applying the high-strength steel sheet.

### Brief Description of Drawings

FIG. 1 is a diagram illustrating an example of bending deformation and an example of a stress distribution on an end surface of a test piece due to the bending deformation;
FIG. 2 is a diagram illustrating an example of a load of uniaxial deformation and an example of a stress distribution on an end surface of a test piece due to the uniaxial deformation;
FIG. 3 is a diagram comparing a stress-strain relationship in a case of constant displacement restraint and constant load application;
FIG. 4 is a schematic view illustrating a tensile test piece having a general parallel portion;
FIG. 5 is a schematic view of a case where a pin hole is drilled and a case where a gripping portion of a chuck is provided for a rectangular-shaped test piece having a sheared end surface of flat cutting;
FIG. 6 is a perspective view of a jig that applies uniaxial tension to a test piece to fix (restrain) the test piece;
FIG. 7 is a side sectional view of the jig;
FIG. 8 is a diagram illustrating an example of a test piece shape that can be assessed with the jig of the present disclosure;
FIG. 9 is a diagram illustrating an example of a stress distribution when the pin is pulled in a shape of a test piece C;
FIG. 10 is a view illustrating a shape of the test piece in an example;
FIG. 11 is a diagram illustrating the stress distribution in a test piece when applying a load of about a yield stress in an example; and
FIG. 12 is a diagram illustrating a stress distribution of a sheared end surface portion formed of flat cutting when a tightening amount (tensile load) of a screw is changed.

### Description of Embodiments

Next, embodiments of the present invention will be described with reference to the drawings.

### (Jig 1 for assessing delayed fracture)

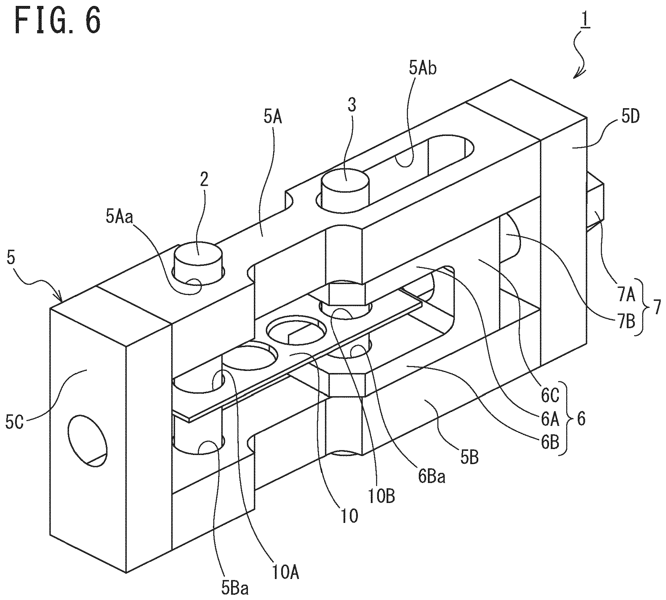

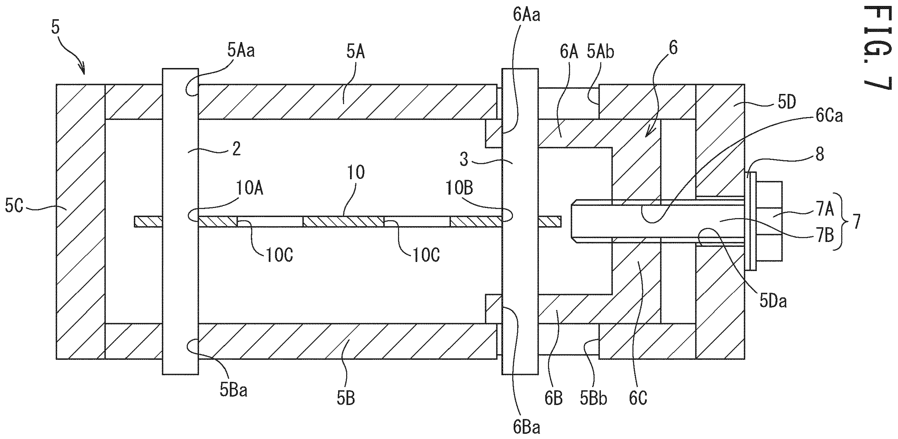

As illustrated in FIGS. 6 and 7, the jig 1 for assessing the delayed fracture of the present embodiment is a jig for applying a tensile load along a longitudinal direction to a test piece 10. The jig 1 is a jig that restrains the test piece 10 in a load state, that is, in a constant displacement state. Furthermore, the jig 1 of the present embodiment is premised on being installed in a hydrogen intrusion environment together with the restrained test piece 10.

Further, in the present embodiment, the test piece 10 is assumed to be a metal sheet formed of a strip-shaped metal sheet and having pin holes 10A and 10B opened each of on both sides in the longitudinal direction. A suitable shape of the test piece 10 will be described later.

As illustrated in FIGS. 6 and 7, the jig 1 according to the present embodiment includes two pins 2 and 3, a frame component 5, a slide component 6, and a tensile force adjustment mechanism.

### <Pins 2 and 3>

Each of the two pins 2 and 3 penetrate any of the two pin holes 10A and 10B formed in the target test piece 10. That is, the two pins 2 and 3 are formed of the first pin 2 that penetrates one pin hole 10A and the second pin 3 that penetrates the other pin hole 10B.

The pins 2 and 3 are not limited to cylindrical rods. It is sufficient that the pins 2 and 3 can penetrate the pin holes 10A and 10B and fix the test piece 10, and may be prismatic rods or the like. Contact surfaces of the pins 2 and 3 with the test piece 10 to be assessed are preferably insulated.

### <Frame component 5>

The frame component 5 is formed with a first insertion hole for inserting each of both end portions of the first pin 2 that penetrates one pin hole 10A of the test piece 10.

The frame component 5 of the present embodiment includes a frame-shaped structure that surrounds a space, in which the target test piece 10 is able to be disposed, by a pair of longitudinal members 5A and 5B, and a pair of lateral members 5C and 5D. Specifically, the pair of longitudinal members 5A and 5B face each other in the sheet thickness direction of the test piece 10 with the target test piece 10 interposed therebetween. In addition, the pair of lateral members 5C and 5D face each other in the longitudinal direction of the test piece 10 with the test piece 10 interposed therebetween, and each connects end portions of the pair of longitudinal members 5A and 5B. As a result, the frame component 5 forms a rectangular frame.

In addition, first insertion holes 5Aa and 5Ba are formed in each of the pair of longitudinal members 5A and 5B. The two first insertion holes 5Aa and 5Ba are formed coaxially with the pair of longitudinal members 5A and 5B in opposite directions. FIGS. 6 and 7 illustrate a case where the two first insertion holes 5Aa and 5Ba are both formed of through-holes. However, one of the first insertion holes 5Aa and 5Ba may be a bottomed hole.

In addition, a width of a part of the pair of longitudinal members 5A and 5B along the longitudinal direction is smaller than the width of the test piece 10. As a result, the state of the sheared end surface of the test piece 10 can be recognized from above the jig 1.

### <Slide component 6>

The slide component 6 is formed with a second insertion hole for inserting each of both end portions of the second pin 3 that penetrates the other pin hole 10B of the test piece 10.

The slide component 6 of the present embodiment is a component having a U-shaped cross section including a pair of foot portions 6A and 6B and root portion 6C that connects end portions of the foot portions 6A and 6B. The pair of foot portions 6A and 6B face each other in the sheet thickness direction of the test piece 10 with the second pin holes 10A and 10B of the target test piece 10 interposed therebetween.

The slide component 6 is disposed in a space between the pair of longitudinal members 5A and 5B of the frame component 5 in use. At this time, a longitudinal direction of the pair of foot portions 6A and 6B, and a longitudinal direction of the pair of the longitudinal members 5A and 5B are disposed to be the same direction. Here, a distance between outer surfaces of the pair of foot portions 6A and 6B is equal to or less than a facing distance between the pair of longitudinal members 5A and 5B.

In use, the outer surfaces of the pair of foot portions 6A and 6B may come into contact with inner surfaces of the pair of longitudinal members 5A and 5B, or may be in a non-contact state. For example, in a case where the outer surfaces (lower surfaces) of the lower foot portions 6A and 6B come into contact with the upper surface of the lower longitudinal member, the upper surface of the lower longitudinal member is a flat surface along the longitudinal direction. In this case, the upper surface of the lower longitudinal member is a guide surface that guides the slide component 6 in the longitudinal direction.

As described above, the slide component 6 is disposed between the pair of longitudinal members 5A and 5B, and has a configuration in which the pair of longitudinal members 5A and 5B can advance and retreat in the longitudinal direction.

Further, consider a case where the slide component 6 is installed in a space surrounded by the frame component 5, that is, in use. In this case, the root portion 6C is disposed to face one lateral member 5D (lateral member 5D on the right side in FIG. 6) in the longitudinal direction of the target test piece 10.

In addition, second insertion holes 6Aa and 6Ba are formed in each of the pair of foot portions 6A and 6B. In the present embodiment, a case where the second insertion holes 6Aa and 6Ba formed in each of the pair of foot portions 6A and 6B are both through-holes is illustrated. One of the two second insertion holes 6Aa and 6Ba may be a bottomed hole.

Further, in the present embodiment, the pair of longitudinal members 5A and 5B have long holes that are open through which the second pin 3 can penetrate. The long hole may not be provided.

### <Tensile force adjustment mechanism>

The tensile force adjustment mechanism is a mechanism for connecting the slide component 6 to the frame component 5 to be able to advance and retreat along the longitudinal direction of the test piece 10. The tensile force adjustment mechanism is configured of a feeding screw mechanism that moves linearly with rotation of a screw 7. The tensile force adjustment mechanism is a mechanism in which the slide component 6 advances and retreats with respect to the frame component 5.

The tensile force adjustment mechanism includes a screw hole 6Ca of which a female thread is formed on an inner surface thereof and the screw 7 (bolt) screwed into the screw hole 6Ca, which configures the feeding screw mechanism. The screw hole 6Ca is a through-hole.

The screw hole 6Ca is formed in the root portion 6C of the slide component 6 and penetrates the root portion 6C toward a shaft in the longitudinal direction of the test piece 10.

In addition, a through-hole 5Da, which is coaxial with the screw hole 6Ca, is opened in the lateral members 5C and 5D proximal to the root portion 6C. An opening area of the through-hole 5Da is smaller than a head portion of the screw 7, through which a shaft 7B of the screw 7 is able to pass.

The screw shaft 7B of the screw 7 penetrates the through-hole 5Da and is screwed into the screw hole 6Ca from the outside of the lateral members 5C and 5D proximal thereto. A washer 8 is interposed between the outer surface of the proximal lateral member 5D and the head portion 7A of the screw 7.

The screw hole 6Ca, the through-hole 5Da, and the screw 7 constitute the tensile force adjustment mechanism.

Then, a position of the screw hole 6Ca is displaced with respect to the screw shaft 7B by rotating the shaft of the screw 7. The slide component 6 advances and retreats with respect to the frame component 5 due to the displacement of the position. Then, the configuration is such that a tensile force in the longitudinal direction can be applied to the target test piece 10 by advancing and retreating thereof.

Here, in a case where at least a part of the jig 1 is made of metal, it is preferable that the contact surface of the jig 1 which comes into contact with the test piece 10 is configured to be electrically insulated from the test piece 10.

For example, the first pin 2 and the second pin 3 are made of an insulating material. Alternatively, in a case where the first pin 2 and the second pin 3 are made of metal, an insulating coating film is formed to a surface of the surfaces of the first pin 2 and the second pin 3, which comes into contact with the test piece 10.

Next, a specific example of a method of electrical insulation between the test piece 10 and the pins 2 and 3, and the jig 1 will be described.

The first method is a method in which an insulating material, for example, ceramics, a polymer, or the like is used for the pins 2 and 3. However, since the pins 2 and 3 are subjected to a strong shear load from the test piece 10, there is a high possibility that the ceramics have a high risk of fracture and the polymer has an insufficient strength.

Therefore, the material of the pins 2 and 3 is preferably metal and has sufficient strength. Furthermore, since the jig 1 is placed in a hydrogen intrusion environment, as the material of the pins 2 and 3, stainless steel having sufficient corrosion resistance is the most appropriate. Therefore, it is effective to electrically insulate a contact portion between the test piece 10 and the stainless steel pins 2 and 3 by disposing the insulating coating film thereon.

The following two methods can be illustrated as the method.

That is, firstly, a method of using a tape-shaped polymer resin having high chemical resistance such as Teflon (registered trademark) as a coating material of the pins 2 and 3 can be mentioned.

Secondly, a method of forming an insulating coating film by thermal spraying insulating ceramics on the surfaces of the pins 2 and 3, and the like can be mentioned.

A tensile load is applied to the test piece 10 by the jig 1 of the present disclosure described above. Then, the test piece 10 having the sheared end surface that is displacement-restrained is installed under any hydrogen environment for any time. Then, the test piece 10 is determined whether the delayed fracture occurs according to the applied stress.

Despite the simple configuration, the jig 1 according to the present embodiment applies a uniaxial tension to the test piece 10, and the test piece 10 can be restrained in the load state.

Further, since being placed under a hydrogen intrusion environment, the jig 1 needs to have sufficient corrosion resistance, and needs to have sufficient strength to apply a tensile stress. Therefore, the material of the jig 1 is preferably, for example, stainless steel.

### (Test piece 10)

The test piece 10 of the present embodiment is made of a high-strength steel sheet and preferably has a sheared end surface extending along the longitudinal direction.

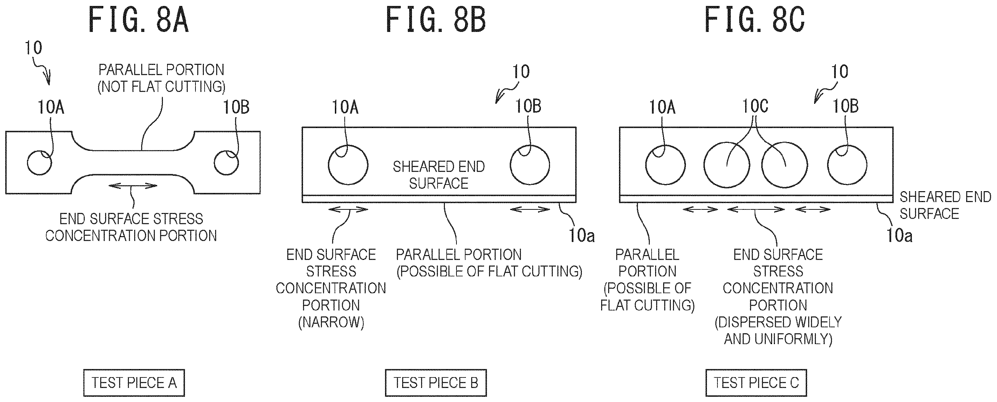

FIG. 8 illustrates an example of a strip-shaped test piece shape that can be used in the present disclosure.

A test piece A illustrated in FIG. 8A has a general test piece shape. The test piece A has a narrow gauge portion between the two pin holes 10A and 10B.

A test piece B illustrated in FIG. 8B is a rectangular test piece 10 having an end portion extending in the longitudinal direction has a linear sheared end surface. Of the two end portions extending in the longitudinal direction, only one end portion may be used as the sheared surface. The other end portion may be a side for which dimensions such as the width of the test piece 10 are adjusted by cutting process or the like.

Compared with the test piece A, the test piece B can easily adjust shearing conditions.

A test piece C illustrated in FIG. 8C is an example of the most suitable test piece 10 in a case of being made of a high-strength steel sheet.

The external shape of the test piece C is the same as that of the test piece B and has a rectangular shape. That is, the test piece C is the rectangular (strip-shaped) test piece 10 having a sheared end surface extending on a straight line along the longitudinal direction between the two pin holes 10A and 10B.

However, the test piece C has one or two or more lightened portions 10C for stress distribution adjustment in a region between the two pin holes 10A and 10B.

Here, the pin holes 10A and 10B, and the lightened portions 10C are formed by mechanical processing or discharge processing. The pin holes 10A and 10B, and the lightened portions 10C have small damage caused by the processing on the end surfaces thereof, and thereby the delayed fracture does not occur. Therefore, the delayed fracture occurs only in the sheared end surface portion. Therefore, only the stress distribution applied to the sheared end surface by the tension is important in the delayed fracture assessment.

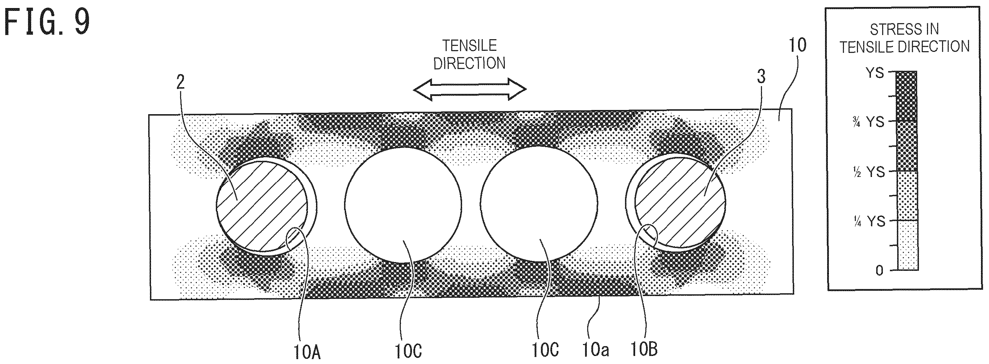

The tensile test piece 10 which is preferable in the present disclosure is the tensile test piece C which is capable of applying a uniform tensile stress to the linear sheared end surface. FIG. 9 illustrates an example of a stress distribution of sheared end surface in a case where tension is applied to the test piece C by the two pins 2 and 3.

Here, in the test piece A, it is possible to apply a uniform tensile stress to the sheared end surface thereof in the narrow width portion (gauge portion). However, in the test piece A, the uniform stress portion of the sheared end surface is a region inside a curved concave region. Therefore, the test piece A is not easy to adjust the shearing conditions as in the linear sheared end surface.

That is, in the test piece A, a dedicated shear die for producing the tensile test piece 10 is required. The test piece A cannot form the sheared end surface using a commonly used shearing machine. Therefore, the test piece A has a drawback that it is difficult to adjust a clearance or a shear angle of a blade of the shearing machine for assessment, and the like.

In the test piece B, the linear sheared end surface can be assessed. However, the test piece B applies the tensile stress only to a small region (portion indicated by an arrow in FIG. 8) directly below the pin holes 10A and 10B. Therefore, the test piece B can be assessed for the delayed fracture. However, the test piece B has a problem that the assessment result depends on a local shearing state at a location where the stress is concentrated and there is a concern about variation.

On the other hand, in the test piece C, the lightened portion 10C is used to adjust the strength distribution in the longitudinal direction in a region between the two pin holes 10A and 10B inside the both end surfaces. As a result, in the test piece C, the stress is dispersed around a central portion of the test piece 10. As a result, in the test piece C, it is possible to uniformly apply the tensile stress to a predetermined distance or more along the longitudinal direction in the sheared end surface extending linearly for flat cutting.

As described above, the test piece C is capable of uniformly applying the tensile stress to the sheared end surface. Moreover, the test piece C is a simple shape in which the outer peripheral contour shape of the test piece C is a rectangular shape similar to the test piece B, and the test piece 10 is easy to produce. Furthermore, as described above, since the sheared surface of the test piece C has a linear shape of flat cutting, it is easy to adjust the shear conditions such as shear clearance. That is, the test piece C has a test piece shape that can easily form a sheared end surface under the shearing conditions according to the actual site.

Here, in the test piece C, a case where the lightened portion 10C is configured with an opening (through-hole) is illustrated. However, the lightened portion 10C may be formed by a method other than the opening. For example, a wall thickness of a region where the opening is formed may be thinned by cutting or the like to form the lightened portion 10C.

In addition, in a case where one opening extending in the longitudinal direction is formed between the pin holes 10A and 10B, there is a concern that deformation occurs, and thereby both sides in the width direction approach each other due to the tensile force. For this reason, it is preferable to provide a plurality of openings aligned along the longitudinal direction constituting the lightened portions 10C. In addition, in the test piece C, a case where two openings are aligned in the longitudinal direction is illustrated. However, the lightened portions 10C may be formed by aligning two or more openings parallel in the width direction, in the longitudinal direction or by forming the openings in a staggered manner.

Here, by providing the lightened portion 10C, the strength of the region between the left and right pin holes 10A and 10B in the test piece 10 along the longitudinal direction is reduced while keeping the sheared end surface linear. As a result, it is a state where a uniform uniaxial tensile stress can be applied to the sheared end surface without breaking the test piece 10 as compared with a case where the lightened portion is not provided. The strength of the portion where the lightened portion 10C is provided is reduced. Therefore, to lower the strength uniformly along the longitudinal direction, as described above, it is preferable to provide a plurality of lightened portions 10C along the longitudinal direction.

When the tensile load is applied to the test piece 10, a region of a stress of 70% or more of a maximum stress of the stress applied to the entire region of the sheared end surface is considered. It is preferable that the lightened portion 10C is adjusted to be formed, and thereby such a region is continuously formed by 3 mm or more along a longitudinal direction of the sheared end surface.

The lightened portion 10C is formed away from the sheared end surface. For example, it is preferable that the position closest to the sheared end surface of the lightened portion 10C is separated from the sheared end surface by 1 mm or more. Further, a region (contour of the outer periphery) of each lightened portion 10C is not limited to a circular shape, and may have a polygonal shape such as an elliptical shape or a rectangular shape. However, it is preferable that each lightened portion 10C has a circular or elliptical shape without corners serving as a stress concentration portion.

Here, FIG. 9 illustrates an example of a stress distribution in the tensile deformation generated in the test piece 10 in a case where the CAE analysis is performed under the condition that the tensile force is applied to the test piece C through the two pin holes 10A and 10B.

As can be seen from FIG. 9, when the test piece C is used, it is possible to assess the linear sheared end surface. Moreover, the tensile stress can be applied relatively uniformly to a wide range of the sheared end surfaces.

Here, the stress is applied to the test piece 10 by applying the tensile force through the two pin holes 10A and 10B. The stress may be measured, for example, by attaching a strain gauge in the vicinity of the sheared end surface. In this case, the tensile strain which is applied to the sheared end surface of the test piece 10 is measured thereby capable of being easily obtained by comparing with a stress-strain curve of the assessment material.

However, as long as sufficient accuracy can be ensured, the relative positional relationship of the jig 1 and the tightening torque of the bolt or the like may be used as an index of the stress applied to the test piece 10.

### (Method for assessing delayed fracture in sheared end surface)

As the strip-shaped test piece 10, the test piece 10 having the pin holes 10A and 10B opened on the left and right sides is used.

The test piece 10 is attached to the jig 1 of the present disclosure. That is, the test piece 10 to be assessed is disposed in the space surrounded by the frame components 5. Then, the first pin 2 and the second pin 3 are inserted into the respective pin holes 10A and 10B, and the test piece 10 is attached to the jig 1. After this, by rotating the head portion of the nut, the slide component 6 is advanced and retreated, and the tensile load is applied to the sheared end surface of the test piece 10. By stopping the rotation of the head portion of the nut, the test piece 10 is restrained by the jig 1 in a constant displacement state to which tensile deformation is applied.

At this time, as described above, the strain gauge may be attached to the vicinity of the sheared end surface of the test piece 10 to measure the strain of the sheared end surface. That is, the amount of strain is also measured together with the tensile force applied by the jig 1. The strain gauge is removed when the environment is set for hydrogen intrusion.

Then, the test piece 10 is installed together with the jig 1 for a preset time with respect to the hydrogen intrusion environment set in advance. The situation of occurrence of cracks is assessed with the test piece 10 in this state.

At this time, the hydrogen intrusion environment and the installation time are preferably set to conditions under which an amount of hydrogen intrusion equivalent to the amount of hydrogen, which is presumed to intrude under an environment where the material to be a target of assessment is actually used, is obtained.

The installation of the test piece 10 under the hydrogen intrusion environment is performed, for example, by immersing the test piece 10 in a bath containing an acid solution such as hydrochloric acid or an aqueous NH₄SCN solution. The concentration of the acid solution and the immersion time are set such that the amount of hydrogen set in advance as the allowable upper limit is a condition for intruding the test piece 10.

The above test is executed by changing the condition of the tensile force applied to the jig 1.

From the test result, the limit of the load stress with the amount of strain as a function can be obtained.

In addition, as the test piece 10, any of the test pieces A, B, and C as illustrated in FIG. 8 can be used in the jig 1 of the present disclosure. However, for more accurate measurement, a test piece having the shape like the test piece C formed of the lightened portion 10C of the present disclosure is preferable.

Here, a known method can be applied to a basic method of the method for assessing the delayed fracture in the sheared end surface.

### Examples

Next, examples based on the present embodiment will be described.

In the present example, as a material constituting the test piece 10, a test material A, which is steel of a strength 1470 MPa class with a sheet thickness of 1.4 mm, will be described as a target. The present disclosure is not limited to the test material A. The present disclosure is applicable to metal materials including high-strength steel sheets having a tensile strength of 980 MPa or more such that the delayed fracture occurs on the sheared end surface.

First, the test material A was subjected to a shearing process to produce the test piece 10 to be assessed. That is, in the present example, the strip-shaped (rectangular shape) test piece 10 having a linear sheared end surface having a length of 80 mm × 30 mm was produced. The shear clearance during the shearing process was 12% with respect to the sheet thickness.

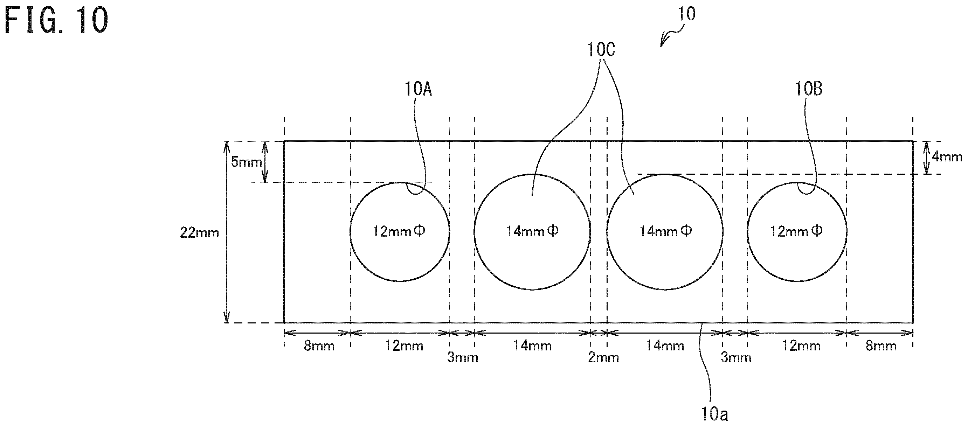

Next, with respect to the produced test piece 10 to be the shape having the dimensions of FIG. 10, the end surface of a portion not to be assessed was subjected to cutting process, leaving a sheared end surface on one side. For example, in FIG. 10, the lower end surface was left as the sheared end surface. Then, the upper end surface side was subjected to cutting process to adjust the width of the test piece 10 to a desired width.

Further, as illustrated in FIG. 10, the pin holes 10A and 10B, and the holes (lightened portions 10C) for adjusting the stress distribution on the end surface were opened and produced by cutting process to the test piece 10.

Furthermore, a strain gauge was attached to the test piece 10 in the vicinity of a location where the tensile stress on the sheared end surface is presumed to be maximum.

A plurality of test pieces 10 as described above were prepared.

### (Example 1)

Next, each of the test pieces 10 was attached to the jig 1 (see FIGS. 6 and 7) of the present embodiment. Then, the tensile load was applied to the test piece 10 by tightening the nut, and the test piece 10 was displacement-restrained.

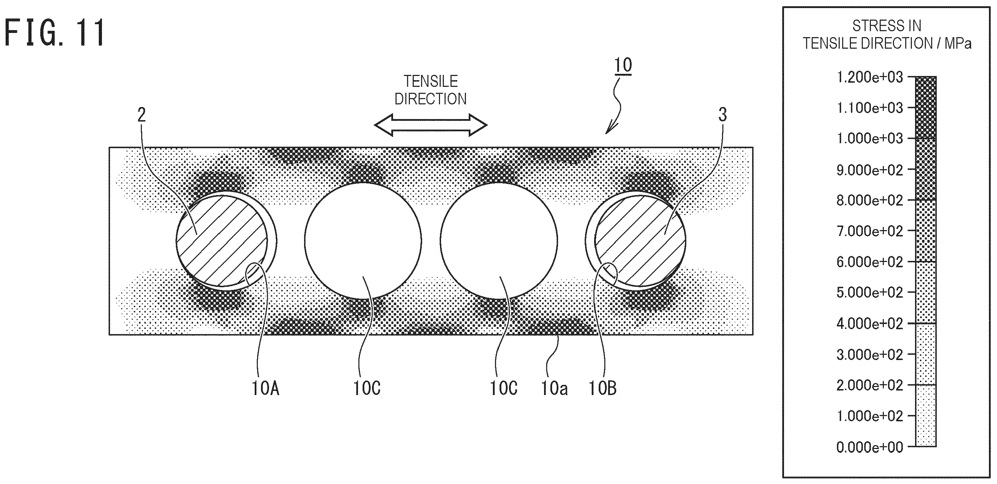

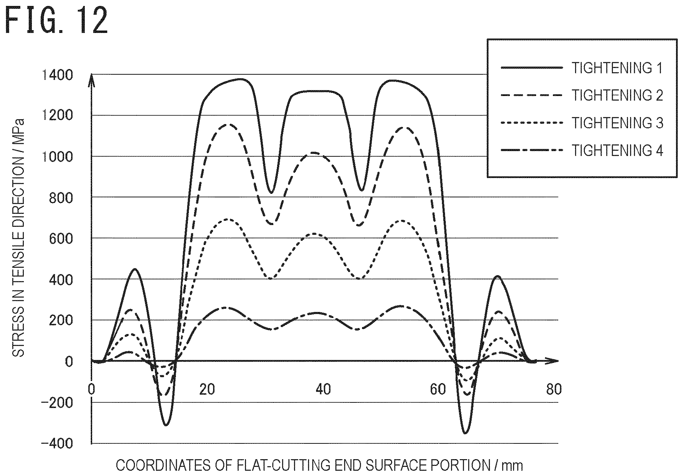

Here, with respect to the test piece 10 having the shape of FIG. 10, CAE analysis was performed under the condition that the sheared end surface thereof receives a tensile stress of about a yield stress (YS) of the uniaxial tension. FIG. 11 illustrates the stress distribution in the tensile direction generated on the test piece 10 based on the analysis. Furthermore, FIG. 12 illustrates the stress distribution of the flat-cutting sheared end surface under various load stresses by changing the tightening amount (tensile load) of the nut. FIG. 10 illustrates the stress distribution in the tensile direction of the flat-cutting sheared end surface from an end surface of 22 mm to an end surface position of 73 mm in the longitudinal direction.

In FIG. 12, the lightened portion 10C is disposed around the vicinity of the peak of the stress.

The lightened portion 10C is provided as illustrated in FIG. 10. As a result, a region having the uniaxial tensile stress of 70% or more of the maximum reached stress is formed in a wide region along the extending direction of the sheared end surface. As can be seen from FIG. 12, it was confirmed that the region could be applied over a region of at least 3 mm or more.

In addition, it was confirmed that, by using the jig 1 of the present embodiment, the tensile force was easily applied to the test piece 10 and the test piece 10 could be immersed in the hydrogen environment.

### (Examples 2 and 3)

In Example 2, in the same manner as in Example 1, the jig 1 of the present embodiment was used to apply the stress to the test piece 10 having the above-described shape by tightening the screw 7. At this time, in the test piece 10, the strain gauge was attached to a location where the stress load of the flat-cutting sheared end surface portion was maximum. Then, the nut was tightened while observing a strain value measured by the strain gauge to adjust an amount of strain. Then, with reference to the stress-strain curve of the test material A, tightening was stopped when the amount of strain is such that the maximum reached stress on the flat-cutting sheared end surface becomes the target stress.

As the jig 1, the pins 2 and 3 were made of stainless steel. However, in Example 2, the contact portions between pins 2 and 3, and the test piece 10 were insulated by wrapping the Teflon tape around the surfaces of pins 2 and 3 to coat them. At this time, conduction between the pins 2 and 3, and the test piece 10 was confirmed by a tester. According to this confirmation, electricity was conductive in a case where the Teflon tape was not coated. On the other hand, in a case of being coated with a Teflon tape, insulation was provided even in a case where the tensile load was applied.

Further, in Example 3, the assessment was performed in a case where the pins 2 and 3 were not covered with the Teflon tape, that is, in a case where there is no insulation between the pins 2 and 3, and the test piece 10. Example 3 was assessed under the same conditions as Example 2 except that the pins 2 and 3 were not coated with the Teflon tape.

That is, the pins 2 and 3 were each assessed in cases where the Teflon tape was used and was not used.

Then, in Examples 2 and 3, the test piece 10 to which the tensile force (load stress) was applied by tightening the screw 7 was immersed in hydrochloric acid at pH 2 for 96 hours together with the jig 1 in the same manner as in Example 1. Then, the delayed fracture with respect to the magnitude of the load stress was assessed.

Here, the assessment of the occurrence of the delayed fracture was determined as OK when there was no "sheet thickness penetration of crack" and NG when there was. In addition, the crack was determined by confirming that the crack was generated and advanced during the delayed fracture test by a camera provided vertically above the jig 1 that restrains the test piece 10. In addition, in a case where the delayed fracture occurred, all occurred in portions of the sheared end surface where the stress was high. At this time, it was possible to photograph the sheared end section of the test piece from a recessed portion of the frame component 5 of the jig 1.

Table 1 illustrates assessment results in Example 2. In addition, Table 2 illustrates assessment results in Example 3.

**[Table 1]**

| Pin insulation | Maximum reaching stress/MPa | OK/NG of delayed fracture |
|---|---|---|
| Presence | 100 | OK |
| | 200 | |
| | 300 | |
| | 400 | |
| | 500 | |
| | 600 | |
| | 700 | NG |
| | 800 | |
| | 900 | |
| | 1000 | |
| | 1100 | |
| | 1200 | |
| | 1300 | |
| | 1400 | |

**[Table 2]**

| Pin insulation | Maximum reaching stress/MPa | OK/NG of delayed fracture |
|---|---|---|
| Absence | 100 | OK |
| | 200 | |
| | 300 | |
| | 400 | |
| | 500 | |
| | 600 | |
| | 700 | |
| | 800 | |
| | 900 | |
| | 1000 | |
| | 1100 | NG |
| | 1200 | |
| | 1300 | |
| | 1400 | |

From Tables 1 and 2, it was confirmed that, the delayed fracture limit stress of the test piece 10 under the hydrogen intrusion environment was 600 MPa in a case of being insulated with the Teflon tape. In addition, it was confirmed that the delayed fracture limit stress was 1000 MPa in a case of not being insulated with the Teflon tape.

As described above, the assessment differs depending on the presence or absence of insulation. That is, it was found that, by insulating the test piece 10, and the pins 2 and 3, the influence of the change in the delayed fracture limit stress due to the contact between dissimilar metals can be eliminated.

Here, in the case of the present test piece, it is confirmed in advance that the delayed fracture limit stress is around 600 MPa under the above conditions.

Further, it is considered that the reason why the delayed fracture limit stress was assessed to be higher in Example 3 which was not insulated is as follows. That is, in the state where the insulation is not performed, the blank (test piece 10), which is an electrically base low carbon steel, comes into contact with the electrically noble stainless steel (jig 1). As a result, the blank side becomes an anode-polarized state and the generation and intrusion of hydrogen are suppressed, which is presumed to be due to the suppression of the delayed fracture. However, in a situation where stress corrosion cracking is predominant, there is also a possibility that fracture is promoted conversely.

As described above, according to the present invention, it is possible to be a state where displacement is restrained by applying a load by tension particularly to the linear sheared end surface, and a uniform tensile stress is applied to the sheared end surface. As a result, it was found that according to the present invention, it is possible to assess the delayed fracture property.

The present application claims priority of Japanese Patent Application No. 2021-185033 (filed on November 12, 2021). Although the present invention has been described with reference to the definite number of embodiments, the scope of the present invention is not limited thereto and modifications of the embodiments based on the above disclosure are obvious to those skilled in the art. Reference Signs List

- 1: jig
- 2: first pin
- 3: second pin
- 5: frame component
- 5A, 5B: longitudinal member
- 5Aa, 5Ba: first insertion hole
- 5C, 5D: lateral member
- 5Da: through-hole
- 6: slide component
- 6A, 6B: foot portion
- 6Aa, 6Ba: second insertion hole
- 6C: root portion
- 6Ca: screw hole
- 7: screw
- 7A: head portion
- 7B: shaft
- 10: test piece
- 10A, 10B: pin hole
- 10C: lightened portion

## Claims

1. A jig (1) for assessing a delayed fracture configured to apply a tensile load along a longitudinal direction to a test piece (10) made of a strip-shaped metal sheet having pin holes (10A, 10B) respective opened on both sides in the longitudinal direction, and for restraining the test piece (10) in a load state, and installed in a hydrogen intrusion environment together with the test piece (10), comprising:
a first pin (2) configured to penetrate one pin hole (10A, 10B) of two pin holes (10A, 10B) formed in the test piece (10), and a second pin (3) configured to penetrate the other pin hole (10A, 10B);
a frame component (5) provided with first insertion holes (5Aa, 5Ba) into which respective both end portions of the first pin (2) that penetrates the one pin hole (10A, 10B) is inserted;
a slide component (6) provided with second insertion holes (6Aa, 6Ba) into which respective both end portions of the second pin (3) that penetrates the other pin hole (10A, 10B) is inserted; and
a tensile force adjustment mechanism configured to connect the slide component (6) to the frame component (5) to be able to advance and retreat along the longitudinal direction of the test piece (10);
wherein the tensile force adjustment mechanism is a mechanism configured to advance and retreat the slide component (6) by a feeding screw mechanism moving linearly with rotation of a screw (7).

2. The jig (1) for assessing a delayed fracture according to claim 1,
wherein the frame component (5) includes a pair of longitudinal members (5A, 5B) that face each other in a sheet thickness direction of the test piece (10) with the test piece (10) interposed between the pair of longitudinal members (5A, 5B), and a pair of lateral members (5C, 5D) that face each other in the longitudinal direction of the test piece (10) with the test piece (10) interposed between the pair of lateral members (5C, 5D), and each connects end portions of the pair of longitudinal members (5A, 5B), and the first insertion hole (5Aa, 5Ba) is formed in the pair of longitudinal members (5A, 5B),
the slide component (6) includes a pair of foot portions (6A, 6B) that face each other in the sheet thickness direction of the test piece (10) with the second pin hole (10A, 10B) of the test piece (10) interposed between the pair of foot portions (6A, 6B), and a root portion (6C) that connects end portions of the foot portions (6A, 6B), and the second insertion hole (6Aa, 6Ba) is formed in the pair of foot portions (6A, 6B),
the slide component (6) is disposed between the pair of longitudinal members (5A, 5B) and is movable in a longitudinal direction of the pair of longitudinal members (5A, 5B), and
a screw hole (6Ca) penetrating toward a shaft (7B) in the longitudinal direction of the test piece (10) is formed in the root portion (6C), a through-hole (5Da) coaxial with the screw hole (6Ca) is opened in the lateral member (5C, 5D) proximal to the root portion (6C), a shaft portion of the screw (7) is screwed into the screw hole (6Ca) through the through-hole (5Da), and the screw hole (6Ca), the through-hole (5Da), and the screw (7) constitute the tensile force adjustment mechanism.

3. The jig (1) for assessing a delayed fracture according to claim 1 or 2,
wherein at least a part of the jig (1) is made of metal, and a contact surface capable of coming into contact with the test piece (10) is electrically insulated from the test piece (10).

4. The jig (1) for assessing a delayed fracture according to claim 3,
wherein the first pin (2) and the second pin (3) are made of an insulating material.

5. The jig (1) for assessing a delayed fracture according to claim 3,
wherein the first pin (2) and the second pin (3) are made of metal, and an insulating film is formed on a surface, coming into contact with the test piece (10), of surfaces of the first pin (2) and the second pin (3).

6. The jig (1) for assessing a delayed fracture according to any of claims 1 to 5, wherein the jig (1) is configured to assess the delayed fracture in a sheared end surface of the test piece (10) made of a high-strength steel sheet and having the sheared end surface extending linearly along the longitudinal direction.

7. A method for assessing a delayed fracture in a sheared end surface, the method comprising:
attaching a test piece (10) to the jig (1) according to claim 6;
applying a tensile load to a sheared end surface of the test piece (10) by advancing and retreating the slide component (6); and
installing the test piece (10) in a hydrogen intrusion environment together with the jig (1) in a load state.

8. The method for assessing a delayed fracture in a sheared end surface according to claim 7,
wherein the tensile load is applied by displacement-restraining the test piece (10).

9. The method for assessing a delayed fracture in a sheared end surface according to claim 7 or 8,
wherein in the test piece (10), a shear cross section located between two pin holes (10A, 10B) is linear along a longitudinal direction of the test piece (10), and a region between the two pin holes (10A, 10B) has one or two or more lightened portions (10C) for a purpose of adjusting a stress distribution of the sheared end surface.

10. The method for assessing a delayed fracture in a sheared end surface according to claim 9,
wherein the lightened portion (10C) has a plurality of openings aligned along the longitudinal direction of the test piece (10).

11. The method for assessing a delayed fracture in a sheared end surface according to claim 9 or 10,
wherein the lightened portion (10C) is formed such that when the tensile load is applied to the test piece (10), a region of a stress of 70% or more of a maximum stress of the stress applied to an entire region of the sheared end surface is continuous 3 mm or more along a longitudinal direction of the sheared end surface.

12. The method for assessing a delayed fracture in a sheared end surface according to any one of claims 7 to 11,
wherein a strain gauge is attached in a vicinity of the sheared end surface of the test piece (10), and a strain of the sheared end surface is measured.

## Patentansprüche

1. Spannvorrichtung (1) zum Beurteilen eines verzögerten Bruchs, die dazu konfiguriert ist, eine Zugbelastung entlang einer Längsrichtung auf einen Probekörper (10) anzuwenden, der aus einem streifenförmigen Metallblech besteht und Bolzenlöcher (10A, 10B) aufweist, die jeweils auf beiden Seiten in der Längsrichtung geöffnet sind, und zum Beschränken des Probekörpers (10) in einem Belastungszustand, und die zusammen mit dem Probekörper (10) in einer Umgebung mit Wasserstoffeintritt installiert ist, umfassend:
einen ersten Bolzen (2), der dazu konfiguriert ist, eines von zwei in dem Probekörper (10) ausgebildeten Bolzenlöchern (10A, 10B) zu durchdringen, und einen zweiten Bolzen (3), der dazu konfiguriert ist, das andere Bolzenloch (10A, 10B) zu durchdringen;
eine Rahmenkomponente (5), die mit ersten Einstecklöchern (5Aa, 5Ba) versehen ist, in die jeweils beide Endabschnitte des ersten Bolzens (2), der das eine Bolzenloch (10A, 10B) durchdringt, eingesteckt werden;
eine Gleitkomponente (6), die mit zweiten Einstecklöchern (6Aa, 6Ba) versehen ist, in die jeweils beide Endabschnitte des zweiten Bolzens (3), der das andere Bolzenloch (10A, 10B) durchdringt, eingesteckt werden; und
einen Zugkrafteinstellmechanismus, der dazu konfiguriert ist, die Gleitkomponente (6) mit der Rahmenkomponente (5) zu verbinden, um ein Vor- und Zurückbewegen entlang der Längsrichtung des Probekörpers (10) zu ermöglichen;
wobei der Zugkrafteinstellmechanismus ein Mechanismus ist, der dazu konfiguriert ist, die Gleitkomponente (6) mittels eines Vorschubschraubmechanismus, der sich linear mit der Drehung einer Schraube (7) bewegt, vor- und zurückzubewegen.

2. Spannvorrichtung (1) zum Beurteilen eines verzögerten Bruchs nach Anspruch 1, wobei die Rahmenkomponente (5) ein Paar von Längselementen (5A, 5B) beinhaltet, die einander in einer Blechdickenrichtung des Probekörpers (10) zugewandt sind, während der Probekörper (10) zwischen dem Paar von Längselementen (5A, 5B) angeordnet ist, und ein Paar von Querelementen (5C, 5D), die einander in Längsrichtung des Probekörpers (10) zugewandt sind, während der Probekörper (10) zwischen dem Paar von Querelementen (5C, 5D) angeordnet ist, und die jeweils Abschnitte des Paares von Längselementen (5A, 5B) verbindet, und das erste Einsteckloch (5Aa, 5Ba) in dem Paar von Längselementen (5A, 5B) ausgebildet ist,
die Gleitkomponente (6) ein Paar von Fußabschnitten (6A, 6B) beinhaltet, die einander in der Blechdickenrichtung des Probekörpers (10) zugewandt sind, während das zweite Bolzenloch (10A, 10B) des Probekörpers (10) zwischen dem Paar von Fußabschnitten (6A, 6B) angeordnet ist, sowie einen Stammabschnitt (6C), der die Endabschnitte der Fußabschnitte (6A, 6B) verbindet, und das zweite Einsteckloch (6Aa, 6Ba) in dem Paar von Fußabschnitten (6A, 6B) ausgebildet ist,
die Gleitkomponente (6) zwischen dem Paar von Längselementen (5A, 5B) platziert und in Längsrichtung des Paares von Längselementen (5A, 5B) beweglich ist, und
ein Schraubenloch (6Ca), das in Längsrichtung des Probekörpers (10) in Richtung einer Welle (7B) durchdringt, in dem Stammabschnitt (6C) ausgebildet ist, ein Durchgangsloch (5Da) koaxial zu dem Schraubenloch (6Ca) in dem Querelement (5C, 5D) proximal zu dem Stammabschnitt (6C) geöffnet ist, ein Schaftabschnitt der Schraube (7) in das Schraubenloch (6Ca) durch das Durchgangsloch (5Da) geschraubt ist, und das Schraubenloch (6Ca), das Durchgangsloch (5Da) und die Schraube (7) den Zugkrafteinstellmechanismus ausmachen.

3. Spannvorrichtung (1) zum Beurteilen eines verzögerten Bruchs nach Anspruch 1 oder 2,
wobei mindestens ein Teil der Spannvorrichtung (1) aus Metall besteht und eine Kontaktfläche, die in der Lage ist, mit dem Probekörper (10) in Kontakt zu kommen, gegenüber dem Probekörper (10) elektrisch isoliert ist.

4. Spannvorrichtung (1) zum Beurteilen eines verzögerten Bruchs nach Anspruch 3,
wobei der erste Bolzen (2) und der zweite Bolzen (3) aus einem isolierenden Material bestehen.

5. Spannvorrichtung (1) zum Beurteilen eines verzögerten Bruchs nach Anspruch 3,
wobei der erste Bolzen (2) und der zweite Bolzen (3) aus Metall bestehen und eine Isolierschicht auf einer Oberfläche, die mit dem Probekörper (10) in Kontakt kommt, von Oberflächen des ersten Bolzens (2) und des zweiten Bolzens (3) ausgebildet ist.

6. Spannvorrichtung (1) zum Beurteilen eines verzögerten Bruchs nach einem der Ansprüche 1 bis 5, wobei die Spannvorrichtung (1) dazu konfiguriert ist, den verzögerten Bruch in einer gescherten Endfläche des Probekörpers (10) zu beurteilen, der aus einem hochfesten Stahlblech besteht und dessen gescherte Endfläche sich linear entlang der Längsrichtung erstreckt.

7. Verfahren zum Beurteilen eines verzögerten Bruchs in einer gescherten Endfläche, wobei das Verfahren umfasst:
Befestigen eines Probekörpers (10) an der Spannvorrichtung (1) nach Anspruch 6;
Anwenden einer Zugbelastung auf eine gescherte Endfläche des Probekörpers (10) durch Vor- und Zurückbewegen der Gleitkomponente (6); und
Installieren des Probekörpers (10) in einer Umgebung mit Wasserstoffeintritt zusammen mit der Spannvorrichtung (1) in einem belasteten Zustand.

8. Verfahren zum Beurteilen eines verzögerten Bruchs in einer gescherten Endfläche nach Anspruch 7,
wobei die Zugbelastung durch Verschiebungsbeschränkung des Probekörpers (10) angewendet wird.

9. Verfahren zum Beurteilen eines verzögerten Bruchs in einer gescherten Endfläche nach Anspruch 7 oder 8,
wobei in dem Probekörper (10) ein Scherquerschnitt, der sich zwischen zwei Bolzenlöchern (10A, 10B) befindet, entlang einer Längsrichtung des Probekörpers (10) linear verläuft und eine Region zwischen den beiden Bolzenlöchern (10A, 10B) einen, zwei oder mehrere entlastete Abschnitte (10C) aufweist, um eine Spannungsverteilung an der gescherten Endfläche einzustellen.

10. Verfahren zum Beurteilen eines verzögerten Bruchs in einer gescherten Endfläche nach Anspruch 9,
wobei der entlastete Abschnitt (10C) eine Vielzahl von Öffnungen aufweist, die entlang der Längsrichtung des Probekörpers (10) ausgerichtet sind.

11. Verfahren zum Beurteilen eines verzögerten Bruchs in einer gescherten Endfläche nach Anspruch 9 oder 10,
wobei der entlastete Abschnitt (10C) so ausgebildet ist, dass, wenn die Zugbelastung auf den Probekörper (10) angewendet wird, eine Region mit einer Spannung von 70 % oder mehr einer maximalen Spannung der Spannung, die auf eine gesamte Region der gescherten Endfläche angewendet wird, über eine Länge von 3 mm oder mehr in Längsrichtung der gescherten Endfläche durchgängig ist.

12. Verfahren zum Beurteilen eines verzögerten Bruchs in einer gescherten Endfläche nach einem der Ansprüche 7 bis 11,
wobei ein Dehnungsmessstreifen in einer Nähe der gescherten Endfläche des Probekörpers (10) befestigt wird und eine Dehnung der gescherten Endfläche gemessen wird.

## Revendications

1. Gabarit (1) d'évaluation d'une rupture retardée, configuré pour appliquer une charge de traction le long d'une direction longitudinale sur une pièce test (10) constituée d'une tôle métallique en forme de bande ayant des trous de goupille (10A, 10B) respectivement ouverts aux deux extrémités dans la direction longitudinale, et de rétention de la pièce test (10) dans un état de charge, et installé, conjointement avec la pièce test (10), dans un environnement d'intrusion d'hydrogène, comprenant :
une première goupille (2) configurée pour pénétrer dans un premier trou de goupille (10A, 10B) des deux trous de goupille (10A, 10B) formés dans la pièce test (10), et une seconde goupille (3) configurée pour pénétrer dans l'autre trou de goupille (10A, 10B) ;
un composant de cadre (5) muni de premiers trous d'insertion (5Aa, 5Ba) dans lesquels sont insérées deux portions d'extrémité respectives de la première goupille (2) qui pénètre dans le premier trou de goupille (10A, 10B) ;
un composant coulissant (6) muni de seconds trous d'insertion (6Aa, 6Ba) dans lesquels sont insérées deux portions d'extrémité respectives de la seconde goupille (3) qui pénètre dans l'autre trou de goupille (10A, 10B) ; et
un mécanisme de réglage de force de traction configuré pour relier le composant coulissant (6) au composant de cadre (5) de manière à pouvoir avancer et reculer le long de la direction longitudinale de la pièce test (10) ;
dans lequel le mécanisme de réglage de force de traction est un mécanisme configuré pour faire avancer et reculer le composant coulissant (6) au moyen d'un mécanisme à vis d'alimentation se déplaçant linéairement avec une rotation d'une vis (7).

2. Gabarit (1) d'évaluation d'une rupture retardée selon la revendication 1,
dans lequel le composant de cadre (5) comporte une paire d'éléments longitudinaux (5A, 5B) se faisant face l'un et l'autre dans une direction d'épaisseur de tôle de la pièce test (10), la pièce test (10) étant interposée entre ladite paire d'éléments longitudinaux (5A, 5B), et une paire d'éléments latéraux (5C, 5D) se faisant face l'un et l'autre dans la direction longitudinale de la pièce test (10), la pièce test (10) étant interposée entre la paire d'éléments latéraux (5C, 5D), et chacun relie des portions d'extrémité de la paire d'éléments longitudinaux (5A, 5B), et le premier trou d'insertion (5Aa, 5Ba) est formé dans la paire d'éléments longitudinaux (5A, 5B) ;
le composant coulissant (6) comporte une paire de portions de pied (6A, 6B) se faisant face l'un et l'autre dans la direction d'épaisseur de tôle de la pièce test (10), le second trou de goupille (10A, 10B) de la pièce test (10) étant interposé entre la paire de portions de pied (6A, 6B), et une portion de racine (6C) reliant des portions d'extrémité des portions de pied (6A, 6B), et le second trou d'insertion (6Aa, 6Ba) est formé dans la paire de portions de pied (6A, 6B) ;
le composant coulissant (6) est disposé entre la paire d'éléments longitudinaux (5A, 5B) et est mobile dans une direction longitudinale de la paire d'éléments longitudinaux (5A, 5B), et
un trou de vis (6Ca) pénétrant, dans la direction longitudinale de la pièce test (10), vers un arbre (7B) est formé dans la portion de racine (6C), un trou traversant (5Da) coaxial par rapport au trou de vis (6Ca) est ouvert dans l'élément latéral (5C, 5D) de manière proximale à la portion de racine (6C), une portion d'arbre de la vis (7) est vissée dans le trou de vis (6Ca) à travers le trou traversant (5Da), et le trou de vis (6Ca), le trou traversant (5Da) et la vis (7) constituent le mécanisme de réglage de force de traction.

3. Gabarit (1) d'évaluation d'une rupture retardée selon la revendication 1 ou 2,
dans lequel au moins une partie du gabarit (1) est constituée de métal, et une surface de contact capable d'entrer en contact avec la pièce test (10) est électriquement isolée de la pièce test (10).

4. Gabarit (1) d'évaluation d'une rupture retardée selon la revendication 3,
dans lequel la première goupille (2) et la seconde goupille (3) sont constituées d'un matériau isolant.

5. Gabarit (1) d'évaluation d'une rupture retardée selon la revendication 3,
dans lequel la première goupille (2) et la seconde goupille (3) sont constituées de métal, et un film isolant est formé sur une surface, entrant en contact avec la pièce test (10), parmi les surfaces de la première goupille (2) et de la seconde goupille (3).

6. Gabarit (1) d'évaluation d'une rupture retardée selon l'une quelconque des revendications 1 à 5,
dans lequel le gabarit (1) est configuré pour évaluer la rupture retardée sur une surface d'extrémité cisaillée de la pièce test (10) constituée d'une tôle d'acier à haute résistance et ayant la surface d'extrémité cisaillée s'étendant linéairement le long de la direction longitudinale.

7. Procédé d'évaluation d'une rupture retardée dans une surface d'extrémité cisaillée, le procédé comprenant les étapes consistant à :
fixer une pièce test (10) au gabarit (1) selon la revendication 6 ;
appliquer une charge de traction à la surface d'extrémité cisaillée de la pièce test (10) en faisant avancer et reculer le composant coulissant (6) ; et
installer la pièce test (10) dans un environnement d'intrusion d'hydrogène conjointement avec le gabarit (1) dans un état de charge.

8. Procédé d'évaluation d'une rupture retardée dans une surface d'extrémité cisaillée selon la revendication 7,
dans lequel la charge de traction est appliquée en bloquant le déplacement de la pièce test (10).

9. Procédé d'évaluation d'une rupture retardée dans une surface d'extrémité cisaillée selon la revendication 7 ou 8,
dans lequel, dans la pièce test (10), une section transversale de cisaillement située entre deux trous de goupille (10A, 10B) est linéaire le long d'une direction longitudinale de la pièce test (10), et une région située entre les deux trous de goupille (10A, 10B) comporte une ou deux ou plus portions allégées (10C) dans le but de régler une distribution de contrainte de la surface d'extrémité cisaillée.

10. Procédé d'évaluation d'une rupture retardée dans une surface d'extrémité cisaillée selon la revendication 9,
dans lequel la portion allégée (10C) comporte une pluralité d'ouvertures alignées le long de la direction longitudinale de la pièce test (10).

11. Procédé d'évaluation d'une rupture retardée dans une surface d'extrémité cisaillée selon la revendication 9 ou 10,
dans lequel la portion allégée (10C) est formée de sorte que, lorsque la charge de traction est appliquée à la pièce test (10), une région présentant une contrainte égale ou supérieure à 70 % d'une contrainte maximale de la contrainte appliquée à une région entière de la surface d'extrémité cisaillée est continue sur 3 mm ou plus le long de la direction longitudinale de la surface d'extrémité cisaillée.

12. Procédé d'évaluation d'une rupture retardée dans une surface d'extrémité cisaillée selon l'une quelconque des revendications 7 à 11,
dans lequel une jauge de déformation est fixée à une proximité de la surface d'extrémité cisaillée de la pièce test (10), et une déformation de la surface d'extrémité cisaillée est mesurée.
